# EUROPEAN PATENT SPECIFICATION

(11) **EP 3 676 715 B1**
(45) Date of publication and mention of the grant of the patent: **27.03.2024**
(21) Application number: 18850497.1
(22) Date of filing: 28.08.2018
(51) Int. Cl.: G06F 12/0893, G06F 12/0866, G06F 12/0804, G06F 13/16, G06F 12/0808

(54) **CACHE BUFFER**
CACHE-PUFFER
TAMPON DE MÉMOIRE CACHE

(30) Priority: 30.08.2017 US 201715690442
(43) Date of publication of application: 08.07.2020
(73) Proprietor: Micron Technology, Inc., Boise, Idaho 83707-0006 (US)
(72) Inventor: CAGDAS, Dirik, Indianola, Washington 98342 (US); WALKER, Robert M., Raleigh, North Carolina 27615 (US)
(74) Representative: Gill Jennings & Every LLP
(86) International application number: PCT/US2018/048277
(87) International publication number: WO 2019/046255

(56) References cited:
- US-A1- 2003 018 856
- US-A1- 2009 083 497
- US-A1- 2009 182 949
- US-A1- 2009 182 949
- US-A1- 2012 159 082
- US-A1- 2012 317 365
- US-A1- 2015 106 567
- US-A1- 2015 356 019

## Description

### Technical Field

The present disclosure relates generally to memory devices, and more particularly, to apparatuses and methods for a cache buffer.

### Background

Memory devices are typically provided as internal, semiconductor, integrated circuits in computers or other electronic devices. There are many different types of memory including volatile and non-volatile memory. Volatile memory can require power to maintain its data and includes random-access memory (RAM), dynamic random access memory (DRAM), and synchronous dynamic random access memory (SDRAM), among others. Non-volatile memory can provide persistent data by retaining stored data when not powered and can include NAND flash memory, NOR flash memory, read only memory (ROM), Electrically Erasable Programmable ROM (EEPROM), Erasable Programmable ROM (EPROM), and resistance variable memory such as phase change random access memory (PCRAM), resistive random access memory (RRAM), and magnetoresistive random access memory (MRAM), among others.

Memory is also utilized as volatile and non-volatile data storage for a wide range of electronic applications. Non-volatile memory may be used in, for example, personal computers, portable memory sticks, digital cameras, cellular telephones, portable music players such as MP3 players, movie players, and other electronic devices. Memory cells can be arranged into arrays, with the arrays being used in memory devices.

Memory can be part of a memory module (e.g., a dual in-line memory module (DIMM)) used in computing devices. Memory modules can include volatile, such as DRAM, for example, and/or non-volatile memory, such as Flash memory or RRAM, for example. The DIMMs can be using a main memory in computing systems.

US 2009/182949 A1 relates to evicting data entries from caches. US 2015/106567 A1 relates to computer processor employing cache memory with per-byte valid bit. US 2003/018856 A1 relates to evicting data from caches.

### Brief Description of the Drawings

Figure 1 is a block diagram of a computing system including an apparatus in the form of a host and an apparatus in the form of memory system in accordance with one or more embodiments of the present disclosure.
Figure 2 is a block diagram of an apparatus in the form of a memory system in accordance with a number of embodiments of the present disclosure.
Figure 3 is a flow diagram of a request serviced by a buffer receiving data from a cache in accordance with a number of embodiments of the present disclosure.
Figure 4 is a flow diagram of a number of requests serviced by a number of buffers in accordance with a number of embodiments of the present disclosure.
Figure 5 is a flow diagram of a request serviced by a buffer receiving data from a memory device in accordance with a number of embodiments of the present disclosure.

### Detailed Description

According to aspects of the present invention, there is provided an apparatus and method, as set out in the appended independent claims, related to a cache buffer. An example apparatus can store data associated with a first request in a particular one of a number of buffers and service a subsequent, second request for data associated with the request using the particular one of the number of buffers.

In a number of embodiments, a number of buffers can be allocated to service requests and/or subsequent requests that are associated with data allocated to a particular buffer. The number of buffers can be searchable by the cache controller, so that data associated with a subsequent request can be located in a buffer and the subsequent request can be serviced using the buffer. Servicing a request using searchable buffers allows the cache line where the data in the buffer was located to not be locked while servicing a request that moves the data from the cache line to the buffer.

Also, buffers that are allocated to service a request can be masked so the masked buffers are not accessible when servicing subsequent requests. Buffers can be masked in response to receiving requests associated with data that is to be written to a cache line from which data was evicted and stored in the buffers that are being masked.

In a number of embodiments, using searchable buffers can allow the number of buffers to service requests to scale along with the size of the cache. Therefore, performance of the cache using searchable buffer is independent of the size of the cache.

In a number of embodiments, a cache controller can store data associated with a first request in a particular one of the number of buffers and service a subsequent (e.g., a second) request for data associated with the first request using the particular one of the number of buffers. The subsequent request is serviced while the first request is being serviced. The requests and/or subsequent request can evict data from the cache, read data from a buffer and/or cache, and/or write data to a buffer and/or cache. The buffers can be searchable, via a search algorigthm performed with software, firmware, and/or hardware, to identify a block of number associated with data that is stored in the buffer.

In a number of embodiments, the cache controller can store data associated with an initial request in a first buffer and service a first subsequent request for data using another (e.g., a second) buffer and service a second subsequent request using the second buffer. The first buffer with data associated with the initial buffer can be masked while servicing the first subsequent request and the second subsequent request. The first subsequent request can write data to the cache where the data associated with the initial request was evicted. The second subsequent request can be serviced while the initial request and the first subsequent request are being serviced. Data associated with the second subsequent request can be located in another (e.g., second) buffer, which also includes data associated with the first subsequent request, using a linked list structure.

In the following detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and/or structural changes may be made without departing from the scope of the present disclosure. As used herein, the designators "X" and "Y", particularly with respect to reference numerals in the drawings, indicates that a number of the particular feature so designated can be included. As used herein, "a number of" a particular thing can refer to one or more of such things (e.g., a number of memory devices can refer to one or more memory devices).

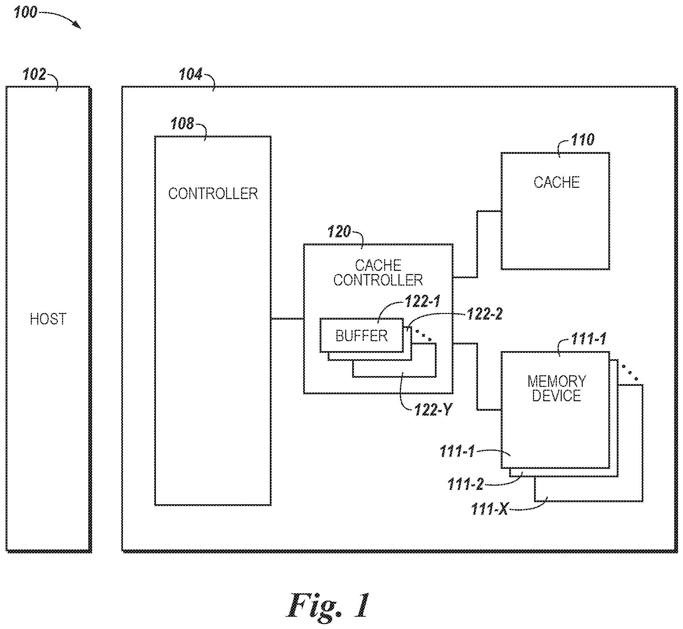

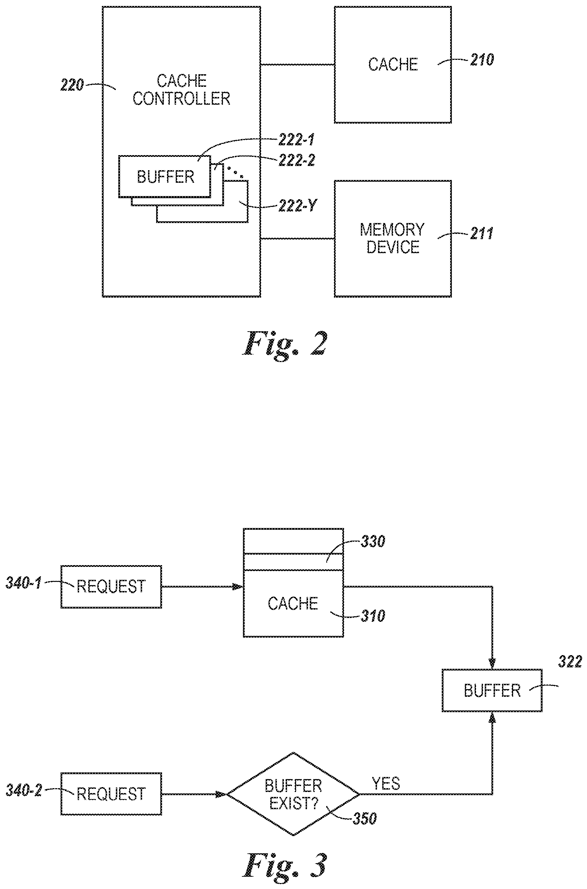

The figures herein follow a numbering convention in which the first digit or digits correspond to the drawing figure number and the remaining digits identify an element or component in the drawing. Similar elements or components between different figures may be identified by the use of similar digits. For example, 120 may reference element "20" in Figure 1, and a similar element may be referenced as 220 in Figure 2. As will be appreciated, elements shown in the various embodiments herein can be added, exchanged, and/or eliminated so as to provide a number of additional embodiments of the present disclosure.

Figure 1 is a functional block diagram of a computing system 100 including an apparatus in the form of a host 102 and an apparatus in the form of memory system 104, in accordance with one or more embodiments of the present disclosure. As used herein, an "apparatus" can refer to, but is not limited to, any of a variety of structures or combinations of structures, such as a circuit or circuitry, a die or dice, a module or modules, a device or devices, or a system or systems, for example. In the embodiment illustrated in Figure 1A, memory system 104 can include a controller 108, a cache controller 120, cache 110, and a number of memory devices 111-1, ..., 111-X. The cache 120 and/or memory devices 111-1, ..., 111-X can include volatile memory and/or non-volatile memory. The cache 110 and/or cache controller 120 can be located on a host, on a controller, and/or on a memory device, among other locations.

As illustrated in Figure 1, host 102 can be coupled to the memory system 104. In a number of embodiments, memory system 104 can be coupled to host 102 via a channel. Host 102 can be a laptop computer, personal computers, digital camera, digital recording and playback device, mobile telephone, PDA, memory card reader, interface hub, among other host systems, and can include a memory access device, e.g., a processor. One of ordinary skill in the art will appreciate that "a processor" can intend one or more processors, such as a parallel processing system, a number of coprocessors, etc.

Host 102 can includes a host controller to communicate with memory system 104. The host 102 can send requests that include commands to the memory system 104 via a channel. The host 102 can communicate with memory system 104 and/or the controller 108 on memory system 104 to read, write, and erase data, among other operations. A physical host interface can provide an interface for passing control, address, data, and other signals between the memory system 104 and host 102 having compatible receptors for the physical host interface. The signals can be communicated between host 102 and memory system 104 on a number of buses, such as a data bus and/or an address bus, for example, via channels.

Controller 108, a host controller, a controller on cache 110, and/or a controller on a memory device can include control circuitry, e.g., hardware, firmware, and/or software. In one or more embodiments, controller 108, a host controller, a controller on cache 110, and/or a controller on a memory device can be an application specific integrated circuit (ASIC) coupled to a printed circuit board including a physical interface. Memory system can include cache controller 120 and cache 110. Cache controller 120 and cache 110 can be used to buffer and/or cache data that is used during execution of read commands and/or write commands.

Cache controller 120 can include a number of buffers 122-1, ..., 122-Y. Buffers 122-1, ..., 122-Y can includes a number of arrays of volatile memory (e.g., SRAM). Buffers 122-1, ..., 122-Y can be configured to store signals, address signals (e.g., read and/or write commands), and/or data (e.g., metadata and/or write data). Buffers 122-1, ..., 122-Y can temporarily store signals and/or data while commands are executed. Cache 110 can include arrays of memory cells (e.g., DRAM memory cells) that are used as cache and can be configured to store data that is also stored in a memory device. The data stored in cache and in the memory device is addressed by the controller and can located in cache and/or the memory device during execution of a command.

Memory devices 111-1, ..., 111-X can provide main memory for the memory system or could be used as additional memory or storage throughout the memory system 104. Each memory device 111-1, ..., 111-X can include one or more arrays of memory cells, e.g., non-volatile and/or volatile memory cells. The arrays can be flash arrays with a NAND architecture, for example. Embodiments are not limited to a particular type of memory device. For instance, the memory device can include RAM, ROM, DRAM, SDRAM, PCRAM, RRAM, and flash memory, among others.

The embodiment of Figure 1 can include additional circuitry that is not illustrated so as not to obscure embodiments of the present disclosure. For example, the memory system 104 can include address circuitry to latch address signals provided over I/O connections through I/O circuitry. Address signals can be received and decoded by a row decoder and a column decoder to access the memory devices 111-1, ..., 111-X. It will be appreciated by those skilled in the art that the number of address input connections can depend on the density and architecture of the memory devices 111-1, ..., 111-X.

Figure 2 is a block diagram of an apparatus in the form of a memory system in accordance with a number of embodiments of the present disclosure. In Figure 2, the memory system can be configured to cache data and service requests from a host and/or memory system controller. The memory system can include cache controller 220 with a number of buffers 222-1, ..., 222-Y. buffers 222-1, ..., 222-Y can include SRAM memory, for example. Buffers 222-1, ..., 222-Y can include information about the data in cache 210, including metadata and/or address information for the data in the cache. The memory system can include a memory device 211 coupled to the cache controller 220. Memory device 211 can include non-volatile memory arrays and/or volatile memory arrays and can serve as the backing store for the memory system.

Memory device 211 can include a controller and/or control circuitry (e.g., hardware, firmware, and/or software) which can be used to execute commands on the memory device 211. The control circuitry can receive commands from a memory system controller and or cache controller 220. The control circuitry can be configured to execute commands to read and/or write data in the memory device 211.

Figure 3 is a flow diagram of a request serviced by a buffer receiving data from a cache in accordance with a number of embodiments of the present disclosure. In Figure 3, a cache controller, such as cache controller 120 in Figure 1, can receive request 340-1. Request 340-1 can cause data 330 to be evicted from a cache line in cache 310. While evicting data 330 from the cache line in cache 310 to a memory device, buffer 322 is allocated to store data 330. Buffer 322 stores data 330 and is searchable by the cache controller when performing subsequent requests. Also, the cache line in cache 310 that stored data 330 is not locked while data 330 is being evicted from cache 310.

The cache controller can receive request 340-2 subsequent to request 340-1 and while request 340-1 is being serviced. Request 340-2 can be serviced while request 340-1 is being serviced via the use of buffer 322 that is searchable by the cache controller. For example, requests for the data 330 that is being evicted from cache 310 while servicing request 340-1 can be serviced via buffer 322.

In a number of embodiments, request 340-2 can be a read command requesting data 330. Request 340-2 can be received by the cache controller while request 340-1 is being serviced and evicted data 330 from cache 310. While servicing request 340-1, buffer 322 can be allocated to data 330, buffer 322 can be searchable by the cache controller, and data 330 can be moved to buffer 322. Request 340-2 can be serviced by the cache controller searching buffers to determine if a buffer with data 330 exists 350. In response to determining that data 330 associated with request 340-2 is in buffer 322, request 340-2 can be serviced by returning data 330 from buffer 322.

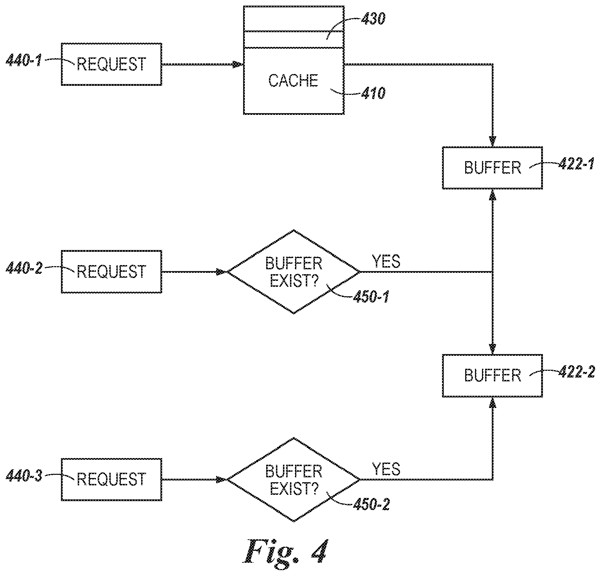

Figure 4 is a flow diagram of a number of requests serviced by a number of buffers in accordance with a number of embodiments of the present disclosure. In Figure 4, a cache controller, such as cache controller 120 in Figure 1, can receive request 440-1. Request 440-1 can cause data 430 to be evicted from a cache line in cache 410. While evicting data 430 from the cache line in cache 410 to a memory device, buffer 422-1 is allocated to store data 430. Buffer 422-1 stores data 430 and is searchable by the cache controller when performing subsequent requests. Also, the cache line in cache 410 that stored data 430 is not locked while data 430 is being evicted from cache 410.

The cache controller can receive request 440-2 subsequent to request 440-1 and while request 440-1 is being serviced. Request 440-2 can be serviced while request 440-1 is being serviced via the use of buffer 422-1 that is searchable by the cache controller. For example, request 440-2 can be a write command to write data to the cache line in cache 410 where data 430 is being evicted. The cache controller can determine that buffer 422-1 includes data 430 that is being evicted from the cache line in cache 410 where data associated with request 440-2 will be written 450-1. In response to determining that buffer 422-1 includes data 430 that is being evicted from the cache line in cache 410 where data associated with request 440-2 will be written, buffer 422-1 can be masked so that data 430 in buffer 422-1 cannot be used by subsequent requests.

Request 440-2 can continue to be serviced by allocating buffer 422-2 for data associated with request 440-2 in response to determining that buffer 422-1 includes data 430 that is being evicted from the cache line in cache 410 where data associated with request 440-2 will be written 450-1. Data associated with request 440-2 can be written to buffer 422-2 while request is being serviced, where request 440-2 writes data to the cache line in cache 410.

The cache controller can receive request 440-3 subsequent to request 440-2 and request 440-1 and while request 440-2 and/or request 440-1 are being serviced. Request 440-3 can be serviced while request 440-2 and/or request 440-1 are being serviced via the use of buffer 422-2 that is searchable by the cache controller. In a number of embodiments, request 440-3 can be a read command requesting data associated with request 440-2. Request 440-3 can be received by the cache controller while request 440-2 is being serviced by writing data to cache 410. While servicing request 440-2, buffer 422-2 can be allocated to the data associated with request 440-2. Buffer 422-2 can be searchable by the cache controller and data associated with request 440-2 can be written to buffer 422-2 while servicing request 440-2. Request 440-3 can be serviced by the cache controller searching buffers to determine if a buffer with data associated with request 440-3 exists 450-2. In response to determining that data associated with request 440-3 is in buffer 422-2, request 440-3 can be serviced by returning data from buffer 422-2.

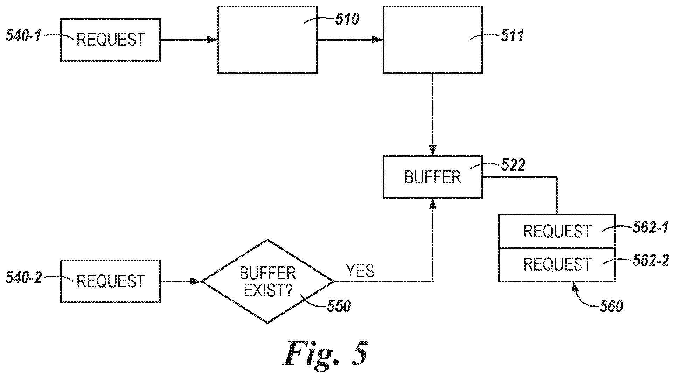

Figure 5 is a flow diagram of a request serviced by a buffer receiving data from a memory device in accordance with a number of embodiments of the present disclosure. In Figure 5, a cache controller, such as cache controller 120 in Figure 1, can receive request 540-1. Request 540-1 can be a read command where the request 540-1 is a cache miss, so that data associated with request 540-1 is not located in cache 510. Request 540-1 can be serviced by allocating buffer 522 to the data associated with request 540-1 and locating the data associated with request 540-1 in a memory device 511. Buffer 522 can be searchable by the cache controller when performing subsequent requests. While data associated with request 540-1 is being retrieved from memory device 511, linked list structure 560 can include a dependency list that includes a number of entries, such as an entry 562-1. Entry 562-1 in linked list structure 560 can indicate that the data in buffer 522 is associated with request 540-1. Therefore, once the data is retrieved from memory device 511 and stored in buffer 522, the entry 562-1 in linked list structure 560 can cause request 540-1 to be serviced by returning the data from buffer 522.

The cache controller can receive request 540-2 subsequent to request 540-1 and while request 540-1 is being serviced. Request 540-2 can be serviced while request 540-1 is being serviced via the use of buffer 522 and linked list structure 560 that is searchable by the cache controller. Request 540-2 can be serviced by determining that buffer allocated to data associated with request 540-2 exists 550. In response to determining that buffer 522 is allocated to data associated with request 540-2, entry 562-2 in linked list structure 560 can indicate that the data in buffer 522 is associated with request 540-2. Therefore, once the data is retrieved from memory device 511 and stored in buffer 522, the entry 562-2 in linked list structure 560 can cause request 540-2 to be serviced by returning the data from buffer 522.

## Claims

1. An apparatus for cache buffering, comprising:
a cache controller (120,220); and
a cache (110, 210, 310, 410, 510) and a memory device (111-1, 111-2, 111-X, 511) coupled to the cache controller, wherein the cache controller includes a number of buffers (122-1, 122-2, 122-Y, 222-1, 222-2, 222-Y, 322, 422-1, 422-2, 522) and wherein the cache controller is configured to:
store data (330, 430) associated with a request (340-1, 440-1) in a first of the number of buffers in response to evicting the data from a cache line of the cache;
search the first buffer for the data in response to receiving a subsequent request (340-2, 440-2, 440-3) for the data, wherein the first buffer is searched while the request (340-1, 440-1) is being serviced by evicting the data from the cache line to the memory device; and
service the subsequent request (340-2, 440-2, 440-3) by locating the data in the first buffer and returning the data to a host.

2. The apparatus of claim 1, wherein the cache controller (120,220) is configured to service the subsequent request (340-2, 440-2, 440-3) while the request (340-1, 440-1) is being serviced.

3. The apparatus of claim 1, wherein the cache controller (120,220) is configured to evict the data (330, 430) from the cache (110, 210, 310, 410) in response to servicing the request (340-1, 440-1).

4. The apparatus of claim 3, wherein the cache controller (120,220) is configured to write data to the cache (110, 210, 310, 410) from which the data (330, 430) associated with the request (340-1, 440-1) was evicted.

5. The apparatus of claim 1, wherein the cache controller (120,220) is configured to read the data from the first of the number of buffers (122-1, 122-2 122-Y, 222-1, 222-2, 222-Y, 322, 422-1, 422-2) in response to the subsequent request (340-2, 440-2, 440-3, 540-2).

6. The apparatus of any one of claims 1-5, wherein the cache controller (120,220) is configured to keep data (330, 430) in the first of the number of buffers (122-1, 122-2, 122-Y, 222-1, 222-2, 222-Y, 322, 422-1, 422-2) until the request (340-1, 440-1) is serviced.

7. The apparatus of claim 6, wherein the cache controller (120,220) is configured to locate data by searching the first of the number of buffers (122-1, 122-2, 122-Y, 222-1, 222-2, 222-Y, 322, 422-1, 422-2).

8. The apparatus of claim 1, wherein a cache line is not locked and the cache controller (120,220) is configured to not wait for a lock release before servicing the subsequent request (340-2, 440-2, 440-3).

9. The apparatus of claim 1, wherein the cache controller (120,220) is configured to mask the first of the number of buffers (122-1, 122-2, 122-Y, 222-1, 222-2, 222-Y, 322, 422-1, 422-2) so that data in the first of the number of buffers cannot be used while servicing another subsequent request (440-2) and wherein the another subsequent request is a write command to a cache line where data is being evicted.

10. A method for cache buffering, comprising:
receiving a request (340-1, 440-1) at a cache controller, wherein the cache controller includes a number of buffers;
storing data associated with the request (340-1, 440-1) in a first buffer of the number of buffers in response to evicting the data from a cache line of a cache coupled to the cache controller;
receiving a subsequent request (340-2, 440-2) for the data at the cache controller (108, 220);
searching the first buffer for the data in response to receiving the subsequent request (340-2, 440-2) for the data, wherein the first buffer is searched while the request (340-1, 440-1) is being serviced by evicting the data from the cache line to a memory device; and
servicing the subsequent request (340-2, 440-2) by locating the data in the first buffer and sending the data (330, 430) stored in the first buffer (122-1, 122-2, 122-Y, 222-1, 222-2, 222-Y, 322, 422-1, 422-2, 522) on the cache controller to a host (102), wherein the data stored in the first buffer is associated with the request (330, 430).

11. The method of claim 10, further including servicing the request (340-1, 440-1) while servicing the subsequent request (340-2, 440-2).

12. The method of claim 10, further including servicing the request (340-1, 440-1) by storing data from the cache line in the first buffer (122-1, 122-2, 122-Y, 222-1, 222-2, 222-Y, 322, 422-1, 422-2, 522) and storing the data in the first buffer to a backing store.

13. The method of any one of claims 10-12, wherein servicing the subsequent request (340-2, 440-2) includes executing a read request for data with an address corresponding to the request.

## Patentansprüche

1. Vorrichtung zur Cache-Pufferung, die Folgendes umfasst:
einen Cache-Controller (120, 220); und
einen Cache (110, 210, 310, 410, 510) und eine mit dem Cache-Controller gekoppelte Arbeitsspeichervorrichtung (111-1, 111-2, 111-X, 511), wobei der Cache-Controller eine Anzahl von Puffern (122-1, 122-2, 122-Y, 222-1, 222-2, 222-Y, 322, 422-1, 422-2, 522) enthält und wobei der Cache-Controller für Folgendes konfiguriert ist:
Speichern von Daten (330, 430), die einer Anforderung (340-1, 440-1) zugeordnet sind, in einem ersten der Anzahl von Puffern als Reaktion auf das Auslagern der Daten aus einer Cache-Zeile des Caches;
Durchsuchen des ersten Puffers nach den Daten als Reaktion auf den Empfang einer nachfolgenden Anforderung (340-2, 440-2, 440-3) nach den Daten, wobei der erste Puffer durchsucht wird, während die Anforderung (340-1, 440-1) durch Auslagern der Daten aus der Cache-Zeile in die Arbeitsspeichervorrichtung bedient wird; und
Bedienen der nachfolgenden Anfrage (340-2, 440-2, 440-3), indem die Daten in dem ersten Puffer lokalisiert werden und die Daten an einen Host zurückgegeben werden.

2. Vorrichtung nach Anspruch 1, wobei der Cache-Controller (120, 220) dafür konfiguriert ist, die nachfolgende Anforderung (340-2, 440-2, 440-3) zu bedienen, während die Anforderung (340-1, 440-1) bedient wird.

3. Vorrichtung nach Anspruch 1, wobei der Cache-Controller (120, 220) dafür konfiguriert ist, die Daten (330, 430) als Reaktion auf die Bedienung der Anforderung (340-1, 440-1) aus dem Cache (110, 210, 310, 410) auszulagern.

4. Vorrichtung nach Anspruch 3, wobei der Cache-Controller (120, 220) dafür konfiguriert ist, Daten in den Cache (110, 210, 310, 410) zu schreiben, aus dem die der Anforderung (340-1, 440-1) zugeordneten Daten (330, 430) ausgelagert wurden.

5. Vorrichtung nach Anspruch 1, wobei der Cache-Controller (120, 220) dafür konfiguriert ist, die Daten aus dem ersten der Anzahl von Puffern (122-1, 122-2, 122-Y, 222-1, 222-2, 222-Y, 322, 422-1, 422-2) als Antwort auf die nachfolgende Anforderung (340-2, 440-2, 440-3, 540-2) zu lesen.

6. Vorrichtung nach einem der Ansprüche 1-5, wobei der Cache-Controller (120, 220) dafür konfiguriert ist, Daten (330, 430) in dem ersten der Anzahl von Puffern (122-1, 122-2, 122-Y, 222-1, 222-2, 222-Y, 322, 422-1, 422-2) zu halten, bis die Anforderung (340-1, 440-1) bedient ist.

7. Vorrichtung nach Anspruch 6, wobei der Cache-Controller (120, 220) dafür konfiguriert ist, Daten durch Durchsuchen des ersten der Anzahl von Puffern (122-1, 122-2, 122-Y, 222-1, 222-2, 222-Y, 322, 422-1, 422-2) zu finden.

8. Vorrichtung nach Anspruch 1, wobei eine Cache-Zeile nicht gesperrt ist und der Cache-Controller (120, 220) dafür konfiguriert ist, nicht auf eine Freigabe der Sperre zu warten, bevor er die nachfolgende Anforderung (340-2, 440-2, 440-3) bedient.

9. Vorrichtung nach Anspruch 1, wobei der Cache-Controller (120, 220) dafür konfiguriert ist, den ersten der Anzahl von Puffern (122-1, 122-2, 122-Y, 222-1, 222-2, 222-Y, 322, 422-1, 422-2) zu maskieren, so dass Daten in dem ersten der Anzahl von Puffern nicht verwendet werden können, während eine andere nachfolgende Anforderung (440-2) bedient wird, und wobei die andere nachfolgende Anforderung ein Schreibbefehl in eine Cache-Zeile ist, aus der Daten ausgelagert werden.

10. Verfahren zur Cache-Pufferung, das Folgendes umfasst:
Empfangen einer Anforderung (340-1, 440-1) bei einem Cache-Controller, wobei der Cache-Controller eine Anzahl von Puffern enthält;
Speichern von Daten, die der Anforderung (340-1, 440-1) zugeordnet sind, in einem ersten Puffer der Anzahl von Puffern als Reaktion auf das Auslagern der Daten aus einer Cache-Zeile eines mit dem Cache-Controller gekoppelten Caches;
Empfangen einer nachfolgenden Anforderung (340-2, 440-2) für die Daten bei dem Cache-Controller (108, 220);
Durchsuchen des ersten Puffers nach den Daten als Reaktion auf den Empfang der nachfolgenden Anforderung (340-2, 440-2) nach den Daten, wobei der erste Puffer durchsucht wird, während die Anforderung (340-1, 440-1) durch Auslagern der Daten aus der Cache-Zeile in eine Arbeitsspeichervorrichtung bedient wird; und
Bedienen der nachfolgenden Anforderung (340-2, 440-2) durch Lokalisieren der Daten in dem ersten Puffer und Senden der in dem ersten Puffer (122-1, 122-2, 122-Y, 222-1, 222-2, 222-Y, 322, 422-1, 422-2, 522) auf dem Cache-Controller gespeicherten Daten (330, 430) an einen Host (102), wobei die in dem ersten Puffer gespeicherten Daten der Anfrage (330, 430) zugeordnet sind.

11. Verfahren nach Anspruch 10, das ferner enthält, dass die Anforderung (340-1, 440-1) bedient wird, während die nachfolgende Anforderung (340-2, 440-2) bedient wird.

12. Verfahren nach Anspruch 10, das ferner die Bearbeitung der Anforderung (340-1, 440-1) durch Speichern von Daten aus der Cache-Zeile im ersten Puffer (122-1, 122-2, 122-Y, 222-1, 222-2, 222-Y, 322, 422-1, 422-2, 522) und Speichern der Daten im ersten Puffer in einem Sicherungsspeicher enthält.

13. Verfahren nach einem der Ansprüche 10-12, wobei das Bedienen der nachfolgenden Anforderung (340-2, 440-2) die Ausführung einer Leseanforderung für Daten mit einer der Anforderung entsprechenden Adresse enthält.

## Revendications

1. Appareil de mise en tampon de mémoire cache, comportant:
un contrôleur de mémoire cache (120, 220) et
une mémoire cache (110, 210, 310, 410, 510) et un dispositif de mémoire (111-1, 111-2, 111-X, 511) couplés au contrôleur de mémoire cache, dans lequel le contrôleur de mémoire cache comprend un certain nombre de tampons (122-1, 122-2, 122-Y, 222-1, 222-2, 222-Y, 322, 422-1, 422-2, 522) et dans lequel le contrôleur de mémoire cache est configuré pour :
stocker des données (330, 430) associées à une demande (340-1, 440-1) dans un premier tampon du nombre de tampons en réponse à l'expulsion des données en provenance d'une ligne de mémoire cache de la mémoire cache ;
effectuer une recherche dans le premier tampon à la recherche des données en réponse à la réception d'une demande ultérieure (340-2, 440-2, 440-3) concernant les données, dans lequel le premier tampon fait l'objet d'une recherche pendant que la demande (340-1, 440-1) est traitée par l'expulsion des données en provenance de la ligne de mémoire cache vers le dispositif de mémoire ; et
traiter la demande ultérieure (340-2, 440-2, 440-3) en localisant les données dans le premier tampon et en renvoyant les données à un hôte.

2. Appareil selon la revendication 1, dans lequel le contrôleur de mémoire cache (120, 220) est configuré pour traiter la demande ultérieure (340-2, 440-2, 440-3) pendant que la demande (340-1, 440-1) est traitée.

3. Appareil selon la revendication 1, dans lequel le contrôleur de mémoire cache (120, 220) est configuré pour expulser les données (330, 430) en provenance de la mémoire cache (110, 210, 310, 410) en réponse au traitement de la demande (340-1, 440-1).

4. Appareil selon la revendication 3, dans lequel le contrôleur de mémoire cache (120, 220) est configuré pour écrire des données dans la mémoire cache (110, 210, 310, 410) en provenance de laquelle les données (330, 430) associées à la demande (340-1, 440-1) ont été expulsées.

5. Appareil selon la revendication 1, dans lequel le contrôleur de mémoire cache (120, 220) est configuré pour lire les données en provenance du premier tampon du nombre de tampons (122-1, 122-2, 122-Y, 222-1, 222-2, 222-Y, 322, 422-1, 422-2) en réponse à la demande ultérieure (340-2, 440-2, 440-3, 540-2) .

6. Appareil selon l'une quelconque des revendications 1 à 5, dans lequel le contrôleur de mémoire cache (120, 220) est configuré pour conserver les données (330, 430) dans le premier tampon du nombre de tampons (122-1, 122-2, 122-Y, 222-1, 222-2, 222-Y, 322, 422-1, 422-2) jusqu'à ce que la demande (340-1, 440-1) soit traitée.

7. Appareil selon la revendication 6, dans lequel le contrôleur de mémoire cache (120, 220) est configuré pour localiser des données en effectuant une recherche dans le premier tampon du nombre de tampons (122-1, 122-2, 122-Y, 222-1, 222-2, 222-Y, 322, 422-1, 422-2).

8. Appareil selon la revendication 1, dans lequel une ligne de mémoire cache n'est pas verrouillée et le contrôleur de mémoire cache (120, 220) est configuré pour ne pas attendre une libération de verrouillage avant de traiter la demande ultérieure (340-2, 440-2, 440-3).

9. Appareil selon la revendication 1, dans lequel le contrôleur de mémoire cache (120, 220) est configuré pour masquer le premier tampon du nombre de tampons (122-1, 122-2, 122-Y, 222-1, 222-2, 222-Y, 322, 422-1, 422-2) de telle sorte que les données dans le premier tampon du nombre de tampons ne peuvent pas être utilisées pendant le traitement d'une autre demande ultérieure (440-2) et dans lequel l'autre demande ultérieure est une commande d'écriture sur une ligne de mémoire cache où les données sont en cours d'expulsion.

10. Procédé de mise en tampon de mémoire cache comportant les étapes consistant à :
recevoir une demande (340-1, 440-1) au niveau d'un contrôleur de mémoire cache, dans lequel le contrôleur de mémoire cache comprend un certain nombre de tampons ;
stocker les données associées à la demande (340-1, 440-1) dans un premier tampon du nombre de tampons en réponse à l'expulsion des données en provenance d'une ligne de mémoire cache d'une mémoire cache couplée au contrôleur de mémoire cache ;
recevoir une demande ultérieure (340-2, 440-2) de données au niveau du contrôleur de mémoire cache (108, 220) ;
effectuer une recherche dans le premier tampon à la recherche des données en réponse à la réception de la demande ultérieure (340-2, 440-2) concernant les données, dans lequel le premier tampon fait l'objet d'une recherche pendant que la demande (340-1, 440-1) est traitée par l'expulsion des données en provenance de la ligne de mémoire cache vers un dispositif de mémoire ; et
traiter la demande ultérieure (340-2, 440-2) par la localisation des données dans le premier tampon et envoyer les données (330, 430) stockées dans le premier tampon (122-1, 122-2, 122-Y, 222-1, 222-2, 222-Y, 322, 422-1, 422-2, 522) sur le contrôleur de mémoire cache à un hôte (102), dans lequel les données stockées dans le premier tampon sont associées à la demande (330, 430).

11. Procédé selon la revendication 10, comprenant par ailleurs l'étape consistant à traiter la demande (340-1, 440-1) tout en traitant la demande ultérieure (340-2, 440-2).

12. Procédé selon la revendication 10, comprenant par ailleurs l'étape consistant à traiter la demande (340-1, 440-1) en stockant les données en provenance de la ligne de mémoire cache dans le premier tampon (122-1, 122-2, 122-Y, 222-1, 222-2, 222-Y, 322, 422-1, 422-2, 522) et en stockant les données dans le premier tampon dans une mémoire de renfort.

13. Procédé selon l'une quelconque des revendications 10 à 12, dans lequel l'étape consistant à traiter la demande ultérieure (340-2, 440-2) comprend l'étape consistant à exécuter une demande de lecture de données avec une adresse correspondant à la demande.
